# EUROPEAN PATENT APPLICATION

(11) **EP 4 759 893 A1**
(43) Date of publication of application: **17.06.2026**
(21) Application number: 24851823.5
(22) Date of filing: 06.08.2024
(51) Int. Cl.: C09J 175/16, C09J 4/00, C09J 4/02, C09J 11/06, C09J 11/08

(54) **ACRYLIC ADHESIVE COMPOSITION**

(30) Priority: 07.08.2023 JP 2023128893
(71) Applicant: Cemedine Co., Ltd., Tokyo 141-8620 (JP)
(72) Inventor: KOTANI, Jun, Tokyo 141-8620 (JP); SAITO, Keisuke, Tokyo 141-8620 (JP); KONNO, Makoto, Tokyo 141-8620 (JP)
(74) Representative: Müller-Boré & Partner Patentanwälte PartG mbB
(86) International application number: PCT/JP2024/027992
(87) International publication number: WO 2025/033399

(57) **Abstract**

An object is to provide an acrylic adhesive composition including a polytetramethylene glycol-based urethane (meth)acrylate compound as an essential component, in which the acrylic adhesive composition has low viscosity and excellent workability and exhibits high peel strength and shear strength. Provided as a solution is an acrylic adhesive composition including, as essential components, (A) a polytetramethylene glycol-based urethane (meth)acrylate compound having a terminal (meth)acrylate group, the polytetramethylene glycol-based urethane (meth)acrylate compound being obtained by reacting (c) a terminal (meth)acrylating agent with a polytetramethylene glycol-based prepolymer obtained by reacting (a) a polyol compound and (b) a polyisocyanate compound at a molar ratio of the component (b)/the component (a) in a range of 0 to 0.5, (B) a polymerizable vinyl monomer, (C) an organic peroxide, and (D) a reducing agent.

## Description

### Technical Field

The present invention relates to an acrylic adhesive composition. In particular, the present invention relates to an acrylic adhesive composition that has low viscosity and excellent workability and that exhibits high peel strength and shear strength.

### Background Art

As one type of acrylic adhesive that undergoes reaction curing at normal temperature, there is an acrylic adhesive in which reaction curing proceeds upon mixing of a peroxide and a decomposition accelerator therefor, which is known as a second-generation acrylic adhesive (SGA). Such a second-generation acrylic adhesive has advantages such as that adhesive strength is exhibited in a short time, that the allowable range of the mixing ratio of the components is wide, and that adhesion to various materials, such as metals and plastics, is excellent, and is therefore widely used in various fields, such as electrical, mechanical, automotive, architectural, and civil engineering fields.

In the second-generation acrylic adhesive, the use of which is increasing as described above, in recent years, use of urethane (meth)acrylate compounds has been studied in order to improve various physical properties of the acrylic adhesive (Patent Literatures 1 to 3); however, even by using these techniques, it is still insufficient to meet market demands for acrylic adhesives, and further improvement has been desired.

The inventors have focused on the fact that, among urethane (meth)acrylate compounds, those containing a polytetramethylene glycol in the main chain are excellent in low-temperature properties, and have found that, in particular, use of a low-crystallinity polytetramethylene glycol achieves excellent heat resistance, elongation of the cured product, and the like (Patent Literature 4). However, in general, various performances of urethane (meth)acrylate compounds are improved by increasing the molecular weight or increasing the amount of urethane bonds in the polymer backbone; therefore, there has been a problem that, in an acrylic adhesive composition using a urethane (meth)acrylate compound, when an attempt is made to improve the performance, the acrylic adhesive composition has high viscosity and is inferior in workability. Furthermore, since such an acrylic adhesive composition tends to have high viscosity, there has also been a problem that the amount of other additive components added is limited and, as a result, desired performance cannot be obtained.

### Citation List

### Patent Literature

PTL 1: International Publication number 2020/100832
PTL 2: Japanese Unexamined Patent Application Publication No. 2020-41042
PTL 3: Japanese Unexamined Patent Application Publication (Translation of PCT Application) No. 2022-526354
PTL 4: International Publication number 2022/249965

### Summary of Invention

### Technical Problem

Adhesive performance required for an acrylic adhesive composition and a product including a cured product thereof as a constituent element has become increasingly strict year by year, and when a polytetramethylene glycol-based urethane (meth)acrylate compound is used in order to achieve such performance, there is a problem that the viscosity becomes high and workability is poor.

An object of the present invention is to provide an acrylic adhesive composition including a polytetramethylene glycol-based urethane (meth)acrylate compound as an essential component, in which the acrylic adhesive composition has low viscosity and excellent workability and exhibits high peel strength and shear strength.

### Solution to Problem

The inventors have conducted intensive studies in order to solve the above problems, and, as a result, have found that the above problems can be solved by an acrylic adhesive composition including, as an essential component, a specific polytetramethylene glycol-based (meth)acrylate compound, and have thus completed the present invention.

Specifically, the present invention provides an acrylic adhesive composition including, as an essential component, a specific polytetramethylene glycol-based (meth)acrylate compound as described below, a cured product thereof, and a product including the cured product as a constituent element.
[Item 1] An acrylic adhesive composition including, as essential components:
   (A) a polytetramethylene glycol-based urethane (meth)acrylate compound having a terminal (meth)acrylate group, the polytetramethylene glycol-based urethane (meth)acrylate compound being obtained by reacting (c) a terminal (meth)acrylating agent with a polytetramethylene glycol-based prepolymer obtained by reacting (a) a polyol compound and (b) a polyisocyanate compound at a molar ratio of the component (b)/the component (a) in a range of 0 to 0.5;
   (B) a polymerizable vinyl monomer;
   (C) an organic peroxide; and
   (D) a reducing agent.
[Item 2] The acrylic adhesive composition according to item 1, wherein the component (A) is contained in an amount of 5 to 60 parts by weight, the component (B) is contained in an amount of 40 to 95 parts by weight, the component (C) is contained in an amount of 0.05 to 10 parts by weight, and the component (D) is contained in an amount of 0.01 to 10 parts by weight, based on 100 parts by weight of a total amount of the component (A) and the component (B).
[Item 3] The acrylic adhesive composition according to item 1 or 2, wherein (b) the polyisocyanate compound is one or more types selected from the group consisting of the following (i) to (iv):
   (i) aliphatic polyisocyanate compounds;
   (ii) alicyclic polyisocyanate compounds;
   (iii) biurets, isocyanurates, adducts, allophanates, carbodiimides, or polymers of aliphatic polyisocyanate compounds; and
   (iv) biurets, isocyanurates, adducts, allophanates, carbodiimides, or polymers of alicyclic polyisocyanate compounds.
[Item 4] The acrylic adhesive composition according to any one of items 1 to 3, wherein (c) the terminal (meth)acrylating agent is an isocyanate group-containing (meth)acrylate compound or a carboxyl group-containing (meth)acrylate compound.
[Item 5] The acrylic adhesive composition according to any one of items 1 to 4, wherein (B) the polymerizable vinyl monomer includes a (meth)acryloyl-based monomer having one or more (meth)acryloyl groups.
[Item 6] The acrylic adhesive composition according to any one of items 1 to 5, wherein (B) the polymerizable vinyl monomer includes methacrylic acid.
[Item 7] The acrylic adhesive composition according to any one of items 1 to 6, wherein (B) the polymerizable vinyl monomer includes a (meth)acrylic acid ester containing a phosphoric acid ester group.
[Item 8] The acrylic adhesive composition according to any one of items 1 to 7, further including (E) a core-shell rubber.
[Item 9] A cured product of the acrylic adhesive composition according to any one of items 1 to 8.
[Item 10] A product including the cured product according to item 9 as a constituent element.

### Advantageous Effects of Invention

According to the present invention, there is provided an acrylic adhesive composition that has low viscosity and excellent workability and that exhibits high peel strength and shear strength.

### Description of Embodiments

Hereinafter, an acrylic adhesive composition of the present invention, a cured product thereof, a cured product thereof, and a product including the cured product as a constituent element will be described.

In the present invention, "(meth)acryl" refers to both "acryl" and "methacryl", "(meth)acrylate" refers to both "acrylate" and "methacrylate", and "(meth)acryloyl group" refers to both "acryloyl group" and "methacryloyl group".

### [Acrylic adhesive composition]

The acrylic adhesive composition of the present invention is an acrylic adhesive composition including, as essential components, (A) a polytetramethylene glycol-based urethane (meth)acrylate compound having a terminal (meth)acrylate group, the polytetramethylene glycol-based urethane (meth)acrylate compound being obtained by reacting (c) a terminal (meth)acrylating agent with a polytetramethylene glycol-based prepolymer obtained by reacting (a) a polyol compound and (b) a polyisocyanate compound at a molar ratio of the component (b)/the component
(a) in a range of 0 to 0.5,
(B) a polymerizable vinyl monomer,
(C) an organic peroxide, and
(D) a reducing agent. The acrylic adhesive composition may further include (E) a core-shell rubber.

### <(A) Polytetramethylene glycol-based urethane (meth)acrylate compound having terminal (meth)acrylate group>

(A) The polytetramethylene glycol-based urethane (meth)acrylate compound having a terminal (meth)acrylate group (A) is a polytetramethylene glycol-based urethane (meth)acrylate compound obtained by reacting (c) a terminal (meth)acrylating agent with a polytetramethylene glycol-based prepolymer obtained by at least reacting (a) a polyol compound and (b) a polyisocyanate compound at a molar ratio of the component (b)/the component (a) in a range of 0 to 0.5.

### <(a) Polyol compound>

(a) The polyol compound may be any compound as long as the compound contains a polytetramethylene glycol and may contain another polyol in addition to the polytetramethylene glycol.

### (Polytetramethylene glycol)

The polytetramethylene glycol is a compound represented by the following formula (1):

HO-(CH₂CH₂CH₂CH₂O)ₙ-H (1)

(wherein in formula (1), n is the number of repeating units.). For example, commercially available compounds from Mitsubishi Chemical Corporation, BASF, Dairen Chemical Corporation, LYCRA Company, Hodogaya Chemical Co., Ltd., and the like can be used.

The number-average molecular weight of the polytetramethylene glycol is not particularly limited. For example, it is preferably 500 or more because an acrylic adhesive composition using the resulting polytetramethylene glycol-based urethane (meth)acrylate compound exhibits excellent adhesive strength, 1,000 or more, more preferably 1,500 or more, and is, for example, 10,000 or less, preferably 7,000 or less, more preferably 5,000 or less because of easy availability, and still more preferably 3,500 or less.

### (Another polyol)

Another polyol other than the polytetramethylene glycol, that may be contained in (a) the polyol compound is not particularly limited as long as it is a polyol having two or more hydroxy groups. Examples of the other polyol include one or more types selected from the group consisting of:
aliphatic polyols, such as ethylene glycol, 1,2-propanediol, 1,3-propanediol, 1,2-butanediol, 1,3-butanediol, 1,4-butanediol, 1,2-pentanediol, 1,3-pentanediol, 1,4-pentanediol, 1,5-pentanediol, 1,6-hexanediol, 1,5-hexanediol, 1,7-heptanediol, 1,8-octanediol, 1,9-nonanediol, 1,10-decanediol, 1,11-undecanediol, 1,12-dodecanediol, 2-methyl-1,3-propanediol, neopentyl glycol, 2-methyl-1,5-pentanediol, 3-methyl-1,5-pentanediol, 2-ethyl-1,6-hexanediol, 2-methyl-1,3-pentanediol, 2-methyl-1,8-octanediol, 1-methyl-1,8-octanediol, glycerol, trimethylolpropane, and pentaerythritol;
alicyclic polyols, such as 1,3-cyclohexanediol, 1,4-cyclohexanediol, 1,3,5-cyclohexanetriol, 1,4-cyclohexanedimethanol, 1,2-cyclopentanediol, 1,3-cyclopentanediol, 1,1-cyclohexanedimethanol, 1,2-cyclohexanedimethanol, 1,3-cyclohexanedimethanol, 1,4-cyclohexanedimethanol, 1,2-cyclooctanediol, 1,5-cyclooctanediol, 5-norbornene-2,2-dimethanol, 5-norbornene-2,3-dimethanol, norbornane-2,3-dimethanol, norbornane-2,5-dimethanol, 2,6-decahydronaphthalenedimethanol, 1,3-adamantanediol, 1,4-adamantanediol, 2,4-adamantanediol, tricyclodecanedimethanol, polyoxyethylene-bisphenol A ether, polyoxypropylene-bisphenol A ether, polyoxyethylene-polyoxypropylene-bisphenol A ether, and hydrogenated bisphenol A;
polyalkylene glycols, such as diethylene glycol, dipropylene glycol, tripropylene glycol, and triethylene glycol; and
polymer polyols, such as polycarbonate polyols, polyether polyols, polyester polyols, polyurethane polyols, and polyolefin polyols, the polymer polyols having a weight-average molecular weight of 300 or more and 10,000 or less.

The amount of the other polyol is, for example, 90% by mass or less, preferably 70% by mass or less, more preferably 50% by mass or less, and still more preferably 20% by mass or less, based on 100% by mass of a total amount of (a) the polyol compound. The other polyol need not be used.

A copolymer of a polytetramethylene glycol and another compound, such as a polyoxytetramethylene-polyoxyethylene glycol copolymer, a polyoxytetramethylene-polyoxypropylene glycol copolymer, or a trimethylolpropane-tris(polyoxytetramethylene-polyoxypropylene) ether copolymer, may be used as a part or all of (a) the polyol compound.

### <(b) Polyisocyanate compound>

The polyisocyanate compound is not particularly limited as long as it is a compound having two or more isocyanate groups.

Examples thereof include one or more types selected from the group consisting of:
aliphatic polyisocyanate compounds, such as 1,6-hexamethylene diisocyanate, 2,2,4-trimethylhexamethylene diisocyanate, 2,4,4-trimethylhexamethylene diisocyanate, 1,4-hexamethylene diisocyanate, 1,5-pentamethylene diisocyanate, 2-methyl-1,5-pentyl diisocyanate, 3-methyl-1,5-pentyl diisocyanate, methylene diisocyanate, 1,2-dimethylene diisocyanate, 1,3-trimethylene diisocyanate, 1,18-octadecylene diisocyanate, 1,4-tetramethylene diisocyanate, 1,10-decamethylene diisocyanate, bis(2-isocyanatoethyl) fumarate, lysine diisocyanate (hexanoic acid-2,6-diisocyanate), 1,6,11-undecane triisocyanate, 1,8-diisocyanato-4-isocyanatomethyloctane, and 1,3,6-hexamethylene triisocyanate;
aromatic polyisocyanate compounds, such as 2,4-tolylene diisocyanate, 2,6-tolylene diisocyanate, 4,4'-diphenylmethane diisocyanate, 2,2'-diphenylmethane diisocyanate, 2,4-diphenylmethane diisocyanate, 3,3'-dimethyl-4,4'-diphenylmethane diisocyanate, polymethylene polyphenylene polyisocyanate, 4,4'-diphenyl ether diisocyanate, 2,4'-diphenyl ether diisocyanate, 4,4'-biphenylene diisocyanate, 3,3'-dimethyl-4,4'-biphenylene diisocyanate, 2,6-dimethyl-4,4'-biphenylene diisocyanate, 3,3'-dimethoxy-4,4'-biphenylene diisocyanate, o-xylylene diisocyanate, m-xylylene diisocyanate, p-xylylene diisocyanate, tetramethylxylylene diisocyanate, 1,5-naphthalene diisocyanate, dianisidine diisocyanate, o-phenyl diisocyanate, m-phenyl diisocyanate, p-phenyl diisocyanate, halogenated phenyl diisocyanates, cumene-2,4-diisocyanate, 4-methoxy-1,3-phenylene diisocyanate, 4-ethoxy-1,3-phenylene diisocyanate, 5,6-dimethyl-1,3-phenylene diisocyanate, benzidine diisocyanate, 1,4-anthracene diisocyanate, 9,10-anthracene diisocyanate, and 4,4'-diisocyanatobenzyl;
alicyclic polyisocyanate compounds, such as methylcyclohexane-2,4-diisocyanate, methylcyclohexane-2,6-diisocyanate, 1,4-(isocyanatomethyl)cyclohexane, 1,3-(isocyanatomethyl)cyclohexane, 1,2-(isocyanatomethyl)cyclohexane, isophorone diisocyanate, dimer acid diisocyanate, bicycloheptane triisocyanate, 4,4'-dicyclohexylmethane diisocyanate, norbornyl diisocyanate, norbornene methane diisocyanate, 1,4-cyclohexane diisocyanate, 1,3-cyclohexane diisocyanate, and hydrogenated products of the foregoing aromatic ring-containing polyisocyanates; and
polyisocyanate derivatives, such as biurets, isocyanurates, adducts, allophanates, carbodiimides, and polymers of these polyisocyanate compounds.

Among these, one or more types selected from the group consisting of the following (i) to (iv) are preferably exemplified;
(i) aliphatic polyisocyanate compounds,
(ii) alicyclic polyisocyanate compounds,
(iii) aliphatic polyisocyanate derivatives that are biurets, isocyanurates, adducts, allophanates, carbodiimides, or polymers of aliphatic polyisocyanate compounds, and
(iv) alicyclic polyisocyanate derivatives that are biurets, isocyanurates, adducts, allophanates, carbodiimides, or polymers of alicyclic polyisocyanate compounds.

More preferably, it is one or more types selected from the group consisting of 1,6-hexamethylene diisocyanate, 2,2,4-trimethylhexamethylene diisocyanate, 2,4,4-trimethylhexamethylene diisocyanate, 1,5-pentamethylene diisocyanate, 2-methyl-1,5-pentyl diisocyanate, 3-methyl-1,5-pentyl diisocyanate, 1,4-tetramethylene diisocyanate, lysine diisocyanate (hexanoic acid-2,6-diisocyanate), methylcyclohexane-2,4-diisocyanate, methylcyclohexane-2,6-diisocyanate, 1,4-(isocyanatomethyl)cyclohexane, 1,3-(isocyanatomethyl)cyclohexane, 1,2-(isocyanatomethyl)cyclohexane, isophorone diisocyanate, 4,4'-dicyclohexylmethane diisocyanate, and biurets, isocyanurates, adducts, allophanates, carbodiimides, and polymers of these polyisocyanate compounds; and still more preferably, it is one or more types selected from the group consisting of 1,6-hexamethylene diisocyanate, 2,2,4-trimethylhexamethylene diisocyanate, 2,4,4-trimethylhexamethylene diisocyanate, 1,5-pentamethylene diisocyanate, 1,4-tetramethylene diisocyanate, 1,4-(isocyanatomethyl)cyclohexane, 1,3-(isocyanatomethyl)cyclohexane, isophorone diisocyanate, 4,4'-dicyclohexylmethane diisocyanate, and biurets, isocyanurates, adducts, allophanates, carbodiimides, and polymers of these polyisocyanate compounds.

As these polyisocyanate compounds, various commercially available products can be used. For example, one or more types selected from the group consisting of the Duranate series (for example, D101, D101, A201, and the like, manufactured by Asahi Kasei Corp.), the STABiO series (manufactured by Mitsui Chemicals, Inc.), the Tolonate series (for example, X FLO 100, HDT, IDT 70 B, HDB-LV, and the like; manufactured by Vencorex), and the FORTIMO series (manufactured by Mitsui Chemicals, Inc.) can be used.

For example, since some of the STABiO series and the Tolonate series are bio-based isocyanates, the biomass degree of polytetramethylene glycol-based (meth)acrylate compounds can be increased by using these.

### (Molar ratio of (b) polyisocyanate compound to (a) polyol compound)

The molar ratio of component (b)/component (a), which is the ratio (molar ratio) of (b) the polyisocyanate compound to (a) the polyol compound, is in a range of 0 to 0.5 and is not particularly limited. The ratio of (b) the polyisocyanate compound relative to 1.0 mol of (a) the polyol compound is 0.0 mol or more, preferably 0.1 mol or more, more preferably 0.15 mol or more, and is 0.5 mol or less, preferably 0.4 mol or less.

If the molar ratio of the component (b)/the component (a) is greater than 0.5, the molecular weight of an oligomer obtained from (a) the polyol compound and the polyisocyanate compound becomes large, so that the viscosity becomes high, and there arises a problem that workability decreases when the oligomer is used as an acrylic adhesive composition.

In urethane (meth)acrylate compounds known in the related art, a molar ratio of polyisocyanate component (b)/polyol component (a) is in a range of 0.5 to 3.0, and studies have been conducted particularly in a range of 1.0 or more and 2.0 or less (for example, paragraph [0074] of International Publication No. 2020/054582, paragraph [0050] of Japanese Unexamined Patent Application Publication No. 2020-164586, paragraph [0013] of International Publication No. 2013/099766, etc.). This is because, in general, at a terminal of a prepolymer obtained by using a polyisocyanate component in excess, an isocyanate group remains, so that a functional group can be subsequently introduced with a monoalcohol compound or a monoamine compound, and thus it is inexpensive and the reaction is easy to control. However, the inventors have found that, contrary to common knowledge of a person skilled in the art, by leaving hydroxy groups of the polyol component, the resulting prepolymer and an acrylic adhesive composition finally prepared become low in viscosity and have excellent performance as an adhesive.

### <(c) Terminal (meth)acrylating agent>

(c) The terminal (meth)acrylating agent is a component that introduces a (meth)acryloyl group into a terminal of a polytetramethylene glycol-based prepolymer, which is a reaction product of (a) the polyol compound containing a polytetramethylene glycol and (b) the polyisocyanate compound.

(c) The terminal (meth)acrylating agent is a component that includes an isocyanate group-containing (meth)acrylate compound or a carboxyl group-containing (meth)acrylate compound, but any component can be used as long as the component introduces a (meth)acryloyl group into a terminal of the prepolymer.

The amount of (c) the terminal (meth)acrylating agent is not particularly limited as long as it is an amount sufficient to introduce a (meth)acrylate group into a terminal of the prepolymer, which is a reaction product of (a) the polyol compound containing a polytetramethylene glycol and (b) the polyisocyanate compound. When the molar ratio of (a) the polyol compound/(b) the polyisocyanate compound in the present invention is 0 to 0.5, a terminal of the resulting prepolymer is a hydroxy group derived from the polyol compound. When the molar amount of such terminal hydroxy groups is defined as X moles, the amount of (c) the terminal (meth)acrylating agent to be introduced is preferably in a range of 0.1X to 1.0X moles, preferably 0.5X moles or more, more preferably 0.8X moles or more, and most preferably 1.0X moles. Incidentally, the molar amount of (c) the terminal (meth)acrylating agent to be introduced is an amount of the terminal (meth)acrylating agent to be bonded to the prepolymer, and when, for example, a compound having low reactivity is used, the reaction may be performed by using a larger excess amount of the terminal (meth)acrylating agent, and an excess terminal (meth)acrylating agent may be removed after the reaction, or in some cases, an acrylic adhesive composition may be formed in a state where the terminal (meth)acrylating agent used in excess remains unreacted in the system.

### (Isocyanate group-containing (meth)acrylate compound)

The isocyanate group-containing (meth)acrylate compound is not particularly limited as long as it is a compound having one or more isocyanate groups or blocked isocyanate groups and one or more (meth)acryloyl groups in its molecule.

Examples thereof include one or more types selected from the group consisting of, for example, 2-isocyanatoethyl (meth)acrylate, 3-isocyanatopropyl (meth)acrylate, 2-isocyanato-1-methylethyl (meth)acrylate, 2-isocyanato-1,1-dimethylethyl (meth)acrylate, 5-(meth)acryloyloxy-3-oxypentyl isocyanate, 4-isocyanatocyclohexyl (meth)acrylate, 2-(2-isocyanatoethoxy)ethyl (meth)acrylate, 1,1-bis((meth)acryloyloxymethyl)ethyl isocyanate, 2-(2-(meth)acryloyloxyethyloxy)ethyl isocyanate, reaction products of the above hydroxy group-containing (meth)acrylate groups and polyol compounds, compounds in which the isocyanate groups of these compounds are masked with blocking agents, 2-[(3,5-dimethylpyrazolyl)carbonylamino]ethyl (meth)acrylate, and 2-(O-[1'-methylpropylideneamino]carboxyamino)ethyl (meth)acrylate.

### (Carboxyl group-containing (meth)acrylate compound)

The carboxyl group-containing (meth)acrylate compound is not particularly limited as long as it is a compound having one or more carboxyl groups and one or more (meth)acryloyl groups in its molecule.

Examples thereof include unsaturated monocarboxylic acids, such as acrylic acid, methacrylic acid, carboxyethyl (meth)acrylate, carboxypentyl (meth)acrylate, ethylsuccinic (meth)acrylate, ethylhexahydrophthalic (meth)acrylate, ethylphthalic (meth)acrylate, propylsuccinic (meth)acrylate, propylhexahydrophthalic (meth)acrylate, propylphthalic (meth)acrylate, ethyltetrahydrophthalic (meth)acrylate, propyltetrahydrophthalic (meth)acrylate, and crotonic acid; unsaturated dicarboxylic acids, such as fumaric acid, maleic acid, and itaconic acid, carboxylic acid anhydrides, such as maleic anhydride and citraconic anhydride; butenedioic acid mono-linear alkyl esters, such as monomethyl fumarate, monoethyl fumarate, mono-n-butyl fumarate, monomethyl maleate, monoethyl maleate, mono-2-ethylhexyl maleate, and mono-n-butyl maleate; butenedioic acid monocyclic alkyl esters, such as monocyclopentyl fumarate, monocyclohexyl fumarate, monocyclopentyl maleate, and monocyclohexyl maleate; and itaconic acid monoesters, such as monomethyl itaconate, monoethyl itaconate, mono-n-butyl itaconate, and monocyclohexyl itaconate.

Among these, from the viewpoint of excellent reactivity and availability, unsaturated monocarboxylic acids, such as acrylic acid, methacrylic acid, and carboxyethyl (meth)acrylate, are preferred.

### (Number-average molecular weight)

The number-average molecular weight of (A) the polytetramethylene glycol-based urethane (meth)acrylate compound having a terminal (meth)acrylate group is not particularly limited. For example, it is 1,000 or more, preferably 2,000 or more, and more preferably 2,500 or more, and is, for example, 30,000 or less, preferably 20,000 or less, and more preferably 15,000 or less.

The number-average molecular weight of (A) the polytetramethylene glycol-based urethane (meth)acrylate compound having a terminal (meth)acrylate group can be adjusted by molecular weights of (a) the polyol compound and (b) the polyisocyanate compound and charging molar amounts of (a) the polyol compound and (b) the polyisocyanate compound, and can be adjusted to a predetermined range by further adjusting the selection of the type of reaction catalyst and the amount thereof, the reaction time, the reaction temperature, and the like as necessary.

### <(B) Polymerizable vinyl monomer>

As the polymerizable vinyl monomer, various polymerizable vinyl monomers can be used without particular limitation. Specifically, various polymerizable vinyl monomers that can be subjected to radical polymerization can be used. Examples of the polymerizable vinyl monomer include (meth)acrylic acid esters, styrene, α-alkylstyrenes, divinylbenzenes, vinyl ethers, divinyl ethers, maleic anhydride, maleic acid esters, maleimide compounds, vinyl acetate, diallyl phthalate, diallyl fumarate, triallyl isocyanurate, vinylbenzyl butyl ether, vinylbenzyl hexyl ether, divinylbenzyl ether, allyl (meth)acrylate, N-vinylpyrrolidone, 2-vinylpyridine, vinyl acetate, and vinyl propionate.

Among these, from the viewpoint of having good reactivity, (meth)acrylic acid esters are preferable.

Examples of the (meth)acrylic acid esters include compounds listed in (i) to (vi) below.

### (i) Monomers represented by general formula Z-O-R¹

In formula (i), Z represents a (meth)acryloyl group, and R¹ represents hydrogen, an alkyl group having 1 to 20 carbon atoms, a cycloalkyl group, a benzyl group, a phenyl group, a tetrahydrofurfuryl group, a glycidyl group, a dicyclopentanyl group, a dicyclopentenyl group, a (meth)acryloyl group, or an isobornyl group.

Examples of monomers represented by general formula (i) include methyl (meth)acrylate, octyl (meth)acrylate, lauryl (meth)acrylate, stearyl (meth)acrylate, cyclohexyl (meth)acrylate, benzyl (meth)acrylate, tetrahydrofurfuryl (meth)acrylate, dicyclopentanyl (meth)acrylate, dicyclopentenyl (meth)acrylate, glycerol (meth)acrylate, glycerol di(meth)acrylate, glycerol formal (meth)acrylate, isobornyl (meth)acrylate, adamantyl (meth)acrylate, norbornyl (meth)acrylate, methyl 2-allyloxy(meth)acrylate, 2-phenoxymethyl (meth)acrylate, 2-phenoxyethyl (meth)acrylate, phenyl (meth)acrylate, methoxyethyl (meth)acrylate, ethoxyethyl (meth)acrylate, butoxyethyl (meth)acrylate, glycidyl (meth)acrylate, 4-(meth)acryloyloxymethyl-2-cyclohexyl-1,3-dioxolane, (2-methyl-2-ethyl-1,3-dioxolan-4-yl)methyl (meth)acrylate, tetrahydrofurfuryl (meth)acrylate, (3-ethyloxetan-3-yl)methyl (meth)acrylate, 4-hydroxybutyl (meth)acrylate glycidyl ether, (meth)acryloylmorpholine, N-(meth)acryloyloxyethyl hexahydrophthalimide, pentamethylpiperidyl (meth)acrylate, N-(meth)acryloyloxysuccinimide, N-(meth)acryloyloxyphthalimide, and (meth)acrylic acid.

### (ii) Monomers represented by general formula Z-O-(R²O)ₚ-R¹

In formula (ii), Z and R¹ are the same as those described above. R² represents -C₂H₄-, -C₃H₆-, -CH₂CH(CH₃)-, - C₄H₈-, or -C₆H₁₂-, and p represents an integer of 1 to 25.

Examples of monomers represented by general formula (ii) include 2-hydroxyethyl (meth)acrylate, 2-hydroxypropyl (meth)acrylate, 3-hydroxypropyl (meth)acrylate, 4-hydroxybutyl (meth)acrylate, ethoxyethyl (meth)acrylate, polyethylene glycol mono(meth)acrylate, polypropylene glycol mono(meth)acrylate, phenoxyethyl (meth)acrylate, dicyclopentenyloxyethyl (meth)acrylate, phenoxy diethylene glycol (meth)acrylate, tripropylene glycol di(meth)acrylate, pentaerythritol (meth)acrylate, ethylene glycol monomethyl ether (meth)acrylate, ethylene glycol monoethyl ether (meth)acrylate, ethylene glycol monobutyl ether (meth)acrylate, diethylene glycol monomethyl ether (meth)acrylate, diethylene glycol monoethyl ether (meth)acrylate, diethylene glycol monobutyl ether (meth)acrylate, diethylene glycol mono-2-ethylhexyl ether (meth)acrylate, dipropylene glycol monomethyl ether (meth)acrylate, N,N-dimethylaminoethyl (meth)acrylate, N,N-diethylaminoethyl (meth)acrylate, 2-(meth)acryloyloxyethyl succinate, and 2-(meth)acryloyloxyethyl phthalate.

### (iii) Monomers represented by general formula Z-(OR²)_{q}-O-Ph-C (R³)₂-Ph-O-(R²O)_{q}-Z

In formula (iii), Z and R² are the same as those described above. R³ represents hydrogen or an alkyl group having 1 to 4 carbon atoms, q represents an integer of 0 to 8, and Ph represents a phenylene group.

Examples of monomers represented by general formula (iii) include EO-modified epoxy (meth)acrylates such as 2,2-bis(4-(meth)acryloxyphenyl)propane, 2,2-bis(4-(meth)acryloxyethoxyphenyl)propane, 2,2-bis(4-(meth)acryloxydiethoxyphenyl)propane, 2,2-bis(4-(meth)acryloxypropoxyphenyl)propane, and 2,2-bis(4-(meth)acryloxypolyethoxyphenyl)propane.

### (iv) Acrylamide monomers

Examples of (iv) acrylamide monomers include (meth)acrylamide, dimethyl (meth)acrylamide, diethyl (meth)acrylamide, 2-hydroxyethyl (meth)acrylamide, 2-hydroxyethyl-N-methyl (meth)acrylamide, 3-hydroxypropyl (meth)acrylamide, N-methyl (meth)acrylamide, N-hydroxyethyl (meth)acrylamide, N-ethyl (meth)acrylamide, N-methylol (meth)acrylamide, N,N-dimethyl (meth)acrylamide, N,N-diethyl (meth)acrylamide, N,N-dipropyl (meth)acrylamide, N,N-dibutyl (meth)acrylamide, N,N-diisobutyl (meth)acrylamide, N,N-di-tert-butyl (meth)acrylamide, N,N-dimethylaminoethyl (meth)acrylamide, dimethylaminopropyl (meth)acrylamide, isopropyl (meth)acrylamide, diacetone (meth)acrylamide, and acryloylmorpholine.

### (v) Multifunctional acrylates other than monomers (i) to (iv) above

Examples of multifunctional acrylates included in (v) include ethylene glycol di(meth)acrylate, 1,3-butylene glycol di(meth)acrylate, 1,4-butylene glycol di(meth)acrylate, 1,6-hexane glycol di(meth)acrylate, diethylene glycol di(meth)acrylate, polyethylene glycol di(meth)acrylate, propylene glycol di(meth)acrylate, tripropylene glycol di(meth)acrylate, polypropylene glycol di(meth)acrylate, neopentyl glycol di(meth)acrylate, polytetramethylene glycol di(meth)acrylate, ethylene oxide-modified neopentyl glycol di(meth)acrylate, propylene oxide-modified neopentyl glycol di(meth)acrylate, bisphenol A di(meth)acrylate, ethylene oxide-modified bisphenol A di(meth)acrylate, epichlorohydrin-modified bisphenol A di(meth)acrylate, ethylene oxide-modified bisphenol S di(meth)acrylate, hydroxypivalic acid ester neopentyl glycol diacrylate, caprolactone-modified hydroxypivalic acid ester neopentyl glycol diacrylate, neopentyl glycol-modified trimethylolpropane di(meth)acrylate, stearic acid-modified pentaerythritol di(meth)acrylate, dicyclopentenyl diacrylate, ethylene oxide-modified dicyclopentenyl di(meth)acrylate, di(meth)acryloyl isocyanurate, trimethylolpropane tri(meth)acrylate, glycerin tri(meth)acrylate, pentaerythritol tri(meth)acrylate, ditrimethylolpropane tetra(meth)acrylate, ditrimethylolpropane hexa(meth)acrylate, pentaerythritol tetra(meth)acrylate, dipentaerythritol hexa(meth)acrylate, dipentaerythritol tri(meth)acrylate, dipentaerythritol tetra(meth)acrylate, dipentaerythritol penta(meth)acrylate, dipentaerythritol monohydroxypenta(meth)acrylate, isocyanuric acid di(meth)acrylate, isocyanuric acid tri(meth)acrylate, triazine tri(meth)acrylate, tris(2-hydroxyethyl)isocyanurate tri(meth)acrylate, propoxylated glycerol tri(meth)acrylate, and propoxylated pentaerythritol tri(meth)acrylate.

### (vi) Oligomers having (meth)acrylate group

Examples of oligomers included in (vi) include poly(meth)acrylic acid ester oligomers, polyester (meth)acrylate-based oligomers, urethane (meth)acrylate-based oligomers other than the component (A) of the present invention, epoxy (meth)acrylate-based oligomers, polycarbonate-based oligomers, epoxy-based oligomers, saturated hydrocarbon-based oligomers, and unsaturated hydrocarbon-based oligomers that have a (meth)acrylate group. Specific examples of these oligomers that can be used include those described in paragraphs [0029] to [0039] of Japanese Unexamined Patent Application Publication No. 2018-188602.

The polymerizable vinyl monomers serving as the component (B), for example, the polymerizable vinyl monomers listed in (i) to (vi) above, may be used alone or in combination of two or more types. The polymerizable vinyl monomers listed in each of (i) to (vi) above may also be used alone or in combination of two or more types.

From the viewpoint that a cured product of the adhesive has a high Tg and has excellent adhesive strength, among the (meth)acrylic acid esters, those having a hydroxy group, an alicyclic alkyl group, or an aromatic ring alkyl group are preferable. From the viewpoint of availability, methyl (meth)acrylate, ethyl (meth)acrylate, 2-hydroxyethyl (meth)acrylate, 2-hydroxypropyl (meth)acrylate, dicyclopentanyl (meth)acrylate, dicyclopentenyl (meth)acrylate, and isobornyl (meth)acrylate are preferable.

The content of the polymerizable vinyl monomer is not particularly limited and is preferably 40 to 95 parts by weight, more preferably 50 to 90 parts by weight, based on 100 parts by weight of the total amount of the component (A) and the component (B). If the content of the polymerizable vinyl monomer is less than 40 parts by weight, the viscosity of the acrylic composition increases and workability tends to be poor, and adhesion may also decrease.

From the viewpoints that a cured product of the adhesive has a high Tg and has excellent adhesive strength, and in addition, heat resistance is also improved, (B) the polymerizable vinyl monomer preferably includes methacrylic acid.

The content of methacrylic acid is preferably 0.1 to 30 parts by weight, more preferably 5 to 25 parts by weight, based on 100 parts by weight of the total amount of the component (A) and the component (B). If the content of methacrylic acid exceeds 30 parts by weight, peel strength of a cured product may decrease.

Furthermore, from the viewpoints that a cured product of the adhesive has a high Tg and has excellent adhesive strength, and elongation is improved, (B) the polymerizable vinyl monomer preferably includes acryloylmorpholine.

The content of acryloylmorpholine is preferably 1 to 50 parts by weight, more preferably 5 to 25 parts by weight, based on 100 parts by weight of the total amount of the component (A) and the component (B). If the content of acryloylmorpholine exceeds 50 parts by weight, a cured product may be brittle and adhesive strength may decrease.

From the viewpoint that adhesion to a metal substrate and adhesive strength are excellent, (B) the polymerizable vinyl monomer preferably includes a (meth)acrylic acid ester containing a phosphoric acid ester group. Specific examples thereof include 2-methacryloyloxyethyl acid phosphate, 2-methacryloyloxypropyl acid phosphate, and bis(2-methacryloyloxyethyl acid) phosphate.

The content of the (meth)acrylic acid ester containing a phosphoric acid ester group is preferably 0.1 to 10 parts by weight, more preferably 0.3 to 5 parts by weight, based on 100 parts by weight of the total amount of the component (A) and the component (B). If the content of the (meth)acrylic acid ester containing a phosphoric acid ester group is less than 0.1 parts by weight, the improvement in adhesion to a metal substrate may be insufficient. If the content exceeds 10 parts by weight, not only economic disadvantage is caused, but also storage stability of the acrylic adhesive composition may decrease.

### <(C) Organic peroxide>

As the organic peroxide (C), various organic peroxides can be used. Examples of the organic peroxide include t-butyl peroxybenzoate, t-butyl peroxydecanoate, cumene hydroperoxide, p-menthane hydroperoxide, t-butyl hydroperoxide, diisopropylbenzene dihydroperoxide, methyl ethyl ketone peroxide, and benzoyl peroxide.

These organic peroxides may be used alone or in combination of two or more types. Among these, hydroperoxides are preferable because they are stable in a normal temperature (25°C ± 5°C) environment, are easy to handle, and easily initiate a reaction in a normal temperature environment when used in combination with a reducing agent, and in particular, cumene hydroperoxide is preferably used because of its excellent stability.

The content of the organic peroxide is preferably 0.05 to 10 parts by weight, more preferably 0.1 to 5 parts by weight, based on 100 parts by weight of the total amount of the component (A) and the component (B). If the content of the organic peroxide is less than 0.05 parts by weight, the curing rate may decrease. If the content exceeds 10 parts by weight, storage stability of the acrylic adhesive composition may deteriorate.

### <(D) Reducing agent>

As (D) the reducing agent, various compounds that generate radicals when an organic peroxide reacts with the reducing agent can be used. Examples of the reducing agent include reaction condensates of an amine and an aldehyde, triethylamine, tripropylamine, tributylamine, N,N-dimethyl-p-toluidine, 2-mercaptobenzimidazole, methylthiourea, dibutylthiourea, tetramethylthiourea, ethylenethiourea, cobalt compounds such as cobalt octoate, cobalt naphthenate, cobalt acetylacetonate, and cobalt ethyl acetoacetate, copper compounds such as copper naphthenate and copper versatate, and vanadium compounds.

Examples of the vanadium compounds include vanadyl acetylacetonate, vanadyl stearate, vanadium naphthenate, vanadium acetylacetonate, and vanadium benzoylacetonate. Among these, vanadyl acetylacetonate and ethylenethiourea are preferable because of their good reactivity with hydroperoxides.

These reducing agents may be used alone or in combination of two or more types. The content of the reducing agent is preferably 0.01 to 10 parts by weight, more preferably 0.04 to 5 parts by weight, based on 100 parts by weight of the total amount of the component (A) and the component (B). If the content of the reducing agent is less than 0.01 parts by weight, the curing rate may decrease. If the content exceeds 10 parts by weight, storage stability may decrease when the reducing agent coexists with the polymerizable vinyl monomer.

### <Fine rubber particles>

The acrylic adhesive composition of the present invention may further contain, in addition to the components (A) to (D), fine rubber particles, preferably (E) the core-shell rubber.

The fine rubber particles serve to adjust the viscosity of the acrylic adhesive composition and to impart thixotropy, and also serve as an impact modifier for an adhesive layer after curing. The fine rubber particles may be fine particles alone, consisting of at least a rubber layer, or may be core-shell particles including a core layer made of rubber and a shell layer that is a resin layer covering an outside of the core layer.

### ((E) Core-shell rubber)

As (E) the core-shell rubber, various core-shell rubbers can be used. The core-shell rubber can be synthesized as fine polymer particles in which, in the presence of a core layer, a shell layer is formed by graft-polymerizing a graft-copolymerizable monomer component. Examples of the rubber of the core layer that can be used include, but are not limited to, silicone rubber, butadiene rubber, styrene-butadiene rubber, acrylic rubber, acrylonitrile-butadiene-styrene rubber (ABS), methyl methacrylate-butadiene-styrene rubber (MBS), methyl methacrylate-butadiene rubber (MB), methyl methacrylate-butyl acrylate rubber (MBA), methyl methacrylate-butyl acrylate-styrene rubber (MBAS), and acrylonitrile-butyl acrylate-styrene rubber (AAS). The shell layer is typically formed using a (meth)acrylate monomer, an aromatic vinyl monomer, acrylonitrile, or the like or may be formed using a monomer other than the foregoing monomers. Regarding the type of rubber of the core layer and the monomer of the shell layer, one type or two or more types may be used according to the desired properties.

The content of (E) the core-shell rubber is preferably 2 to 50 parts by weight, more preferably 5 to 30 parts by weight, based on 100 parts by weight of the total amount of the component (A) and the component (B).

### <Other additives>

The acrylic adhesive composition of the present invention may further contain, in addition to the components (A) to (E), various additives ("other additives").

Examples of the other additives include one or more types selected from the group consisting of, for example, elastomers that impart toughness or flexibility to cured products, thixotropic agents, storage stabilizers (polymerization inhibitors, antioxidants, and the like), epoxy resins, filling agents, organic solvents (for example, volatile liquids such as alcohols, esters, and hydrocarbons), flame retardants, anti-sagging agents, sedimentation-preventing agents, curing accelerators, flame retardants, anti-aging agents, heat stabilizers, light stabilizers, ultraviolet absorbers, fragrances, lubricants (such as waxes), antimicrobial agents, antifungal agents, leveling agents, colorants, luster-imparting agents, adhesiveness-imparting agents, tackifying resins, surface conditioners, surfactants, defoaming agents, wetting agents, antirust agents, leveling agents, chain transfer agents (such as polythiol compounds), viscosity preparations, sensitizers, adhesion promoters (for example, silane coupling agents and the like), plasticizers, and antistatic agents. The content of such an additive is not particularly limited as long as it does not impair properties of the acrylic adhesive composition and a cured product thereof, and an amount necessary to impart desired properties can be used.

Furthermore, paraffin, beeswax, and the like for improving curability at an air contact surface, or various reaction accelerators and curing modifiers for adjusting the curing rate may be blended.

### (Elastomer)

The elastomer is not particularly limited as long as the elastomer imparts toughness or flexibility to a cured product. Examples thereof include various synthetic rubbers such as acrylonitrile-butadiene-methacrylic acid copolymers, acrylonitrile-butadiene-methyl methacrylate copolymers, methyl methacrylate-butadiene-styrene copolymers (MBS resins), acrylonitrile-styrene-butadiene copolymers, acrylonitrile-butadiene rubber, urethane rubber, styrene-butadiene rubber, chloroprene rubber, polyisoprene rubber, nitrile rubber, acrylic rubber, epichlorohydrin rubber, and butadiene rubber; natural rubber; liquid rubbers such as liquid polybutadiene, terminal acrylic-modified liquid polybutadiene, and liquid acrylonitrile-butadiene copolymers; styrene-based thermoplastic elastomers such as styrene-polybutadiene-styrene synthetic rubber; olefin-based thermoplastic elastomers such as polyethylene-EPDM synthetic rubber; urethane-based thermoplastic elastomers such as caprolactone-type, adipate-type, and PTMG-type thermoplastic polyurethanes; polyester-based thermoplastic elastomers such as polybutylene terephthalate-polytetramethylene glycol multiblock polymers; polyamide-based thermoplastic elastomers such as nylon-polyol block copolymers and nylon-polyester block copolymers; 1,2-polybutadiene-based thermoplastic elastomers; and vinyl chloride-based thermoplastic elastomers. These elastomers may be used alone or in combination of two or more types as long as separation is not observed.

### (Thixotropic agent)

The thixotropic agent is not particularly limited as long as the thixotropic agent can impart thixotropy. For example, thixotropic agents such as finely powdered polyethylene, benzylidene-D-sorbitol, cellulose triacetate, stearamide, amide waxes, bentonite, and finely powdered silica may be blended. These thixotropic agents may be used alone or in combination of two or more types.

### (Storage stabilizer)

As the storage stabilizer, for example, various antioxidants including polymerization inhibitors can be used. Examples of the antioxidants include stable radical-type compounds such as p-methoxyphenol, hydroquinone, benzoquinone, 2,6-di-tert-butyl-p-cresol, 2,2'-methylenebis(4-methyl-6-tert-butylphenol), pentaerythritol tetrakis[3-(3,5-di-tert-butyl-4-hydroxyphenyl)propionate], triphenyl phosphite, phenothiazine, N-isopropyl-N'-phenyl-p-phenylenediamine, 1-oxyl-2,2,6,6-tetramethylpiperidine, 4-hydroxy-2,2,6,6-tetramethylpiperidine 1-oxyl, and 4-methacryloyloxy-2,2,6,6-tetramethylpiperidine 1-oxyl. Among these, hindered phenol-based antioxidants, hydroquinone, and benzoquinone are preferable. These storage stabilizers may be used alone or in combination of two or more types.

### (Epoxy resin)

The acrylic adhesive composition of the present invention may further contain an epoxy resin. Adding an epoxy resin to the acrylic adhesive composition makes it possible, for example, to adjust the hardness of a cured product of the acrylic adhesive composition with a crosslinked structure, to improve adhesion to metals with hydroxy groups generated by ring opening of epoxy groups, to improve cohesive force of the polymer, and to reduce the viscosity as a diluent.

Examples of the epoxy resin include bisphenol-type epoxy compounds such as bisphenol A-type glycidyl ether and bisphenol F-type glycidyl ether; and alicyclic epoxy compounds such as 3,4-epoxycyclohexylmethyl-3,4-epoxycyclohexanecarboxylate and 3,4-epoxy-6-methylcyclohexylmethyl-3,4-epoxycyclohexanecarboxylate. These epoxy resins may be used alone or in combination of two or more types.

### (Filling agent)

A filler can be added, as a filling agent, to the acrylic adhesive composition of the present invention in order to impart mechanical strength, wear resistance, electrical conductivity, and thermal conductivity and to adjust the clay and thixotropy of the acrylic adhesive composition. Specific examples thereof include various filling agents described in paragraphs [0134] to [0151] of Japanese Unexamined Patent Application Publication No. 2006-291073. Examples of the filling agents include finely powdered silica which is reinforcing silica such as fumed silica and wet-process silica, carbon black, wood flour, pulp, cotton chips, mica, walnut shell powder, rice husk powder, graphite, white clay, silica (such as crystalline silica, fused silica, dolomite, anhydrous silicic acid, and hydrated silicic acid), heavy calcium carbonate, colloidal calcium carbonate, magnesium carbonate, diatomaceous earth, calcined clay, clay, talc, titanium oxide, bentonite, organic bentonite, ferric oxide, red iron oxide, finely powdered aluminum, flint powder, zinc oxide, active zinc white, zinc dust, zinc carbonate, shirasu balloons, beads and hollow fine particles of polyacrylic resins, polyacrylonitrile-vinylidene chloride resins, phenolic resins, polystyrene resins, and the like, inorganic hollow fine particles such as glass balloons, shirasu balloons, and fly ash balloons, fibrous filling agents such as glass fibers, glass filaments, carbon fibers, Kevlar (registered trademark) fibers, and polyethylene fibers, electrically conductive fillers such as carbon nanotubes, fullerenes, electrically conductive carbon, tin, and lithium titanate, thermally conductive fillers such as black lead (graphite), boron nitride, aluminum nitride, aluminum hydroxide, silicon nitride, alumina, magnesia, beryllia, calcium carbonate, aluminum powder, copper powder, iron powder, titanium carbide, and diamond, and sound-absorbing fillers.

The content of the filling agent is not particularly limited, but the filling agent is used in an amount of 0.1 to 1,000 parts by weight, preferably 10 to 500 parts by weight, and particularly preferably 10 to 100 parts by weight, based on 100 parts by weight of the total amount of the component (A) and the component (B). If the content is less than 0.1 parts by weight, the effect of improving reinforcement may be insufficient, and if the content exceeds 1,000 parts by weight, workability of the acrylic adhesive composition may decrease. However, since the acrylic adhesive composition of the present invention has low viscosity, the content can be larger than those of other adhesive compositions. The filling agents may be used alone or in combination of two or more types.

### <Form of acrylic adhesive composition>

The form of the acrylic adhesive composition of the present invention is not particularly limited, and can be appropriately determined depending on the use, constituent components, and the like.

For example, the acrylic adhesive composition of the present invention can be a one-component acrylic adhesive composition containing (A) the polytetramethylene glycol-based urethane (meth)acrylate compound having a terminal (meth)acrylate group, (B) the polymerizable vinyl monomer, (C) the organic peroxide, and (D) the reducing agent.

For example, the acrylic adhesive composition of the present invention can be a two-component acrylic adhesive composition composed of an agent A containing (A) the polytetramethylene glycol-based urethane (meth)acrylate compound having a terminal (meth)acrylate group, (B) the polymerizable vinyl monomer, and (C) the organic peroxide and an agent B containing (A) the polytetramethylene glycol-based urethane (meth)acrylate compound having a terminal (meth)acrylate group, (B) the polymerizable vinyl monomer, and (D) the reducing agent. When the acrylic adhesive composition of the present invention is a two-component acrylic adhesive composition, preferably, both (C) the organic peroxide and (D) the reducing agent are not simultaneously contained in the agent A and/or the agent B. Furthermore, components other than (A) to (D) may be contained in either one or both of the agent A and the agent B.

The acrylic adhesive composition of the present invention can be particularly suitably used as a two-component acrylic adhesive composition.

### <Method for using acrylic adhesive composition>

The acrylic adhesive composition of the present invention provides a cured product serving as an adhesive by causing a polymerization reaction due to the action of the organic peroxide and the reducing agent, and a method for using the acrylic adhesive composition can be a method similar to that of a common acrylic adhesive.

The acrylic adhesive composition of the present invention can be used in, for example, a bonding method in which a mixture of the agent A and the agent B is applied to an adherend, or a bonding method in which, when adherends separately coated with the agent A and the agent B are bonded together, the agents A and B are mixed. For mixing the agent A and the agent B, a static mixer having a structure capable of mixing the two agents at an end or a mechanical mixing device can be used, but the method is not limited thereto.

The acrylic adhesive composition of the present invention is rapidly cured at normal temperature by the action of the organic peroxide and the reducing agent; however, by performing adjustment in consideration of reactivity of each of the components, it is also possible to increase the curing rate in order to shorten the work time, or conversely, to decrease the curing rate in order to extend the pot life. In addition, curability at high temperature and low temperature can also be appropriately adjusted.

The acrylic adhesive of the present invention has excellent heat resistance at high temperature and also excellent peel strength at low temperature. The acrylic adhesive has excellent adhesion to various adherend materials, for example, materials such as metals, resins, glass, ceramics, paper, cloth, fibers, wood, bamboo, and the like, and particularly has excellent adhesion to metals such as iron and aluminum, wood, concrete, and composite plastics such as CFRP, GFRP, and FRP. The acrylic adhesive also has excellent adhesion to oily surfaces. Furthermore, the acrylic adhesive has excellent durability such as heat aging resistance, heat and humidity aging resistance, and hot water aging resistance. Moreover, since shear strength and peel strength are good, it is expected that a joined body does not undergo a brittle fracture but undergoes a ductile fracture when the joined body is broken. Impact resistance is also good, and thus a highly reliable adhesive is provided.

The acrylic adhesive of the present invention also has good storage stability and low viscosity, and thus has excellent dischargeability from a container, excellent mixability, and excellent workability. Furthermore, by taking advantage of low viscosity, high filling of thermally conductive fillers, electrically conductive fillers, flame-retardant fillers, and the like can be realized to prepare an adhesive having higher performance such as thermal conductivity, electrical conductivity, and flame retardancy. When the acrylic adhesive composition is used as a two-component adhesive composition, the differences in weight ratio and volume ratio sometimes do not have significant influences; therefore, operation management is facilitated. Note that the acrylic adhesive of the present invention can be used in various fields, for example, for electrical and electronic fields, automobiles, airplanes, ships, motorcycles, trains, machines, buildings, civil engineering, office supplies, daily sundries, and the like.

There are provided various products having a cured product of the acrylic adhesive composition of the present invention as a constituent element.

### [Cured product]

A cured product of the present invention is obtained by curing the acrylic adhesive composition of the present invention.

Regarding the cured product, a polymerization reaction of the acrylic adhesive composition is initiated by the action of (C) the organic peroxide and (D) the reducing agent, which are essential components of the acrylic adhesive composition, and a cured product of the acrylic adhesive composition is formed.

### [Product having cured product as constituent element]

A product having a cured product of the acrylic adhesive composition of the present invention as a constituent element is a product obtained by bonding with the acrylic adhesive composition of the present invention.

The product is obtained by bonding the above-described various adherend materials using the acrylic adhesive composition of the present invention and has a cured product of the acrylic adhesive composition as a constituent element.

Examples of the product include electrical and electronic equipment, electrical and electronic components, mechanical parts, vehicle parts, and vehicle interior members.

### EXAMPLES

A more specific description will be given below with reference to Examples. It goes without saying that these Examples are illustrative and should not be construed as limiting. Unless otherwise specified, "%" means "% by weight", and "part" means "part by weight".

### [Measurement methods]

### <Viscosity>

The viscosity of an acrylic adhesive composition in Example 1 was measured at 23°C using a B-type viscometer (TVB-15M viscometer, manufactured by Toki Sangyo Co., Ltd.).

Regarding the viscosity of each acrylic adhesive composition other than Example 1, the viscosity of an agent B was measured at a measurement temperature of 23°C, using a parallel-plate rotational viscometer manufactured by Brookfield Engineering, with plates having a diameter of 20 mm and a gap distance of 0.175 mm and at a rotational speed of 100 (1/s), and evaluated as a relative value with the value of Example 1 being 100.

### <Tensile shear adhesive strength>

Two SPCC steel sheets (25 mm in width × 100 mm in length × 1.6 mm in thickness) whose surfaces had been polished by sandblasting and then surface-treated with acetone were prepared, an acrylic adhesive obtained by mixing was uniformly applied to an area of 25 mm × 12.5 mm of one of the SPCC steel sheets, and the SPCC steel sheet was bonded to the other SPCC steel sheet to prepare a test piece. The thickness of the adhesive layer was adjusted to 0.23 mm.

Subsequently, the test piece was aged for one day or more in an environment at 23°C, and a tensile shear adhesive strength was measured at a tensile speed of 2.5 mm/min and 23°C in accordance with JIS K 6850.

### <T-peel adhesive strength>

Two SPCC steel sheets (25 mm in width × 150 mm in length × 0.5 mm in thickness) whose surfaces had been polished by sandblasting and then surface-treated with acetone were prepared, an acrylic adhesive obtained by mixing was uniformly applied to one of the SPCC steel sheets, and the SPCC steel sheet was bonded to the other SPCC steel sheet to prepare a test piece. The thickness of the adhesive layer was adjusted using glass beads with a diameter of 0.2 mm.

Subsequently, the test piece was aged for one day or more in an environment at 23°C, and a tensile T-peel adhesive strength was measured at a tensile speed of 50 mm/min and 23°C in accordance with JIS K 6854.

### [Synthesis Examples]

### <Synthesis Example 1>

### Synthesis of polytetramethylene glycol-based urethane (meth)acrylate compound UA1

In a 500 mL four-neck separable flask equipped with a stirrer, a thermometer, and a condenser, 51.6 mmol of a polytetramethylene glycol having a molecular weight of 2,900 was weighed as (a) a polyol compound and stirred at 120°C for three hours under high vacuum to remove water contained in the polyol. After the system was cooled to normal temperature, 150 g of toluene, 19.6 mmol of hexamethylene diisocyanate as (b) a polyisocyanate compound, and a tin catalyst as a catalyst in an amount of 100 ppm relative to the polyol compound were added under a stream of nitrogen. The reaction was performed at 80°C for three hours under a stream of nitrogen to synthesize a urethane prepolymer. The temperature of the reaction solution was reduced to 50°C or lower, 96.7 mmol of 2-methacryloyloxyethyl isocyanate was added as (c) a terminal (meth)acrylating agent, and the reaction was performed at 80°C for two hours. The solvent and an excessive amount of 2-methacryloyloxyethyl isocyanate were distilled off under reduced pressure to obtain a polytetramethylene glycol-based urethane (meth)acrylate compound UA1. The molar ratio (b)/(a) of (b) the polyisocyanate compound to (a) the polyol compound in the polytetramethylene glycol-based urethane (meth)acrylate compound UA1 is 0.379.

### <Synthesis Example 2>

### Synthesis of polytetramethylene glycol-based urethane (meth)acrylate compound UA2

A polytetramethylene glycol-based urethane (meth)acrylate compound UA2 was obtained in the same manner as in Synthesis Example 1 except that 52.8 mmol of a polytetramethylene glycol/poly(3-methyl)tetramethylene glycol copolymer having a molecular weight of 3,000 was used as (a) the polyol compound and 96.7 mmol of 2-acryloyloxyethyl isocyanate was used as (c) the terminal (meth)acrylating agent. The molar ratio (b)/(a) of (b) the polyisocyanate compound to (a) the polyol compound in the resulting polytetramethylene glycol-based urethane (meth)acrylate compound UA2 is 0.371.

### <Synthesis Example 3>

### Synthesis of polytetramethylene glycol-based urethane (meth)acrylate compound UA3

A polytetramethylene glycol-based urethane (meth)acrylate compound UA3 was obtained in the same manner as in Synthesis Example 1 except that (b) the polyisocyanate compound was not used and 2-methacryloyloxyethyl isocyanate was directly reacted with both terminals of (a) the polyol compound. The molar ratio (b)/(a) of (b) the polyisocyanate compound to (a) the polyol compound in the resulting polytetramethylene glycol-based urethane (meth)acrylate compound UA3 is 0.

### <Synthesis Example 4>

### Synthesis of polytetramethylene glycol-based urethane (meth)acrylate compound UA4

A polytetramethylene glycol-based urethane (meth)acrylate compound UA4 was obtained in the same manner as in Synthesis Example 1 except that trimethylhexamethylene diisocyanate was used as (b) the polyisocyanate compound. The molar ratio (b)/(a) of (b) the polyisocyanate compound to (a) the polyol compound in the resulting polytetramethylene glycol-based urethane (meth)acrylate compound UA4 is 0.379.

### <Synthesis Example 5>

### Synthesis of polytetramethylene glycol-based urethane (meth)acrylate compound UA5

A polytetramethylene glycol-based urethane (meth)acrylate compound UA5 was obtained in the same manner as in Synthesis Example 1 except that a biomass diisocyanate (trade name: Tolonate X FLO 100, manufactured by Vencorex) was used as (b) the polyisocyanate compound. The molar ratio (b)/(a) of (b) the polyisocyanate compound to (a) the polyol compound in the resulting polytetramethylene glycol-based urethane (meth)acrylate compound UA5 is 0.379.

### <Synthesis Example 6>

### Synthesis of polytetramethylene glycol-based urethane (meth)acrylate compound UA6

A polytetramethylene glycol-based urethane (meth)acrylate compound UA6 was obtained in the same manner as in Synthesis Example 1 except that diphenylmethane diisocyanate was used as (b) the polyisocyanate compound. The molar ratio (b)/(a) of (b) the polyisocyanate compound to (a) the polyol compound in the resulting polytetramethylene glycol-based urethane (meth)acrylate compound UA6 is 0.379.

### <Synthesis Example 7>

### Synthesis of polytetramethylene glycol-based urethane (meth)acrylate compound UA7

A polytetramethylene glycol-based urethane (meth)acrylate compound UA7 was obtained in the same manner as in Synthesis Example 1 except that 77.4 mmol of a polytetramethylene glycol/poly(3-methyl)tetramethylene glycol copolymer having a molecular weight of 2,000 was used as (a) the polyol compound and 65.2 mmol of hexamethylene diisocyanate was used as (b) the polyisocyanate compound. The molar ratio (b)/(a) of (b) the polyisocyanate compound to (a) the polyol compound in the resulting polytetramethylene glycol-based urethane (meth)acrylate compound UA7 is 0.842.

### <Synthesis Example 8>

### Synthesis of polytetramethylene glycol-based urethane (meth)acrylate compound UA8

A polytetramethylene glycol-based urethane (meth)acrylate compound UA8 was obtained in the same manner as in Synthesis Example 1 except that 48.3 mmol of a polytetramethylene glycol/poly(3-methyl)tetramethylene glycol copolymer having a molecular weight of 3,000 was used as (a) the polyol compound and 35.8 mmol of hexamethylene diisocyanate was used as (b) the polyisocyanate compound. The molar ratio (b)/(a) of (b) the polyisocyanate compound to (a) the polyol compound in the resulting polytetramethylene glycol-based urethane (meth)acrylate compound UA8 is 0.741.

### <Synthesis Example 9>

### Synthesis of polytetramethylene glycol-based urethane (meth)acrylate compound UA9

A polytetramethylene glycol-based urethane (meth)acrylate compound UA9 was obtained in the same manner as in Synthesis Example 2 except that 39.1 mmol of diphenylmethane diisocyanate was used as (b) the polyisocyanate compound. The molar ratio (b)/(a) of (b) the polyisocyanate compound to (a) the polyol compound in the resulting polytetramethylene glycol-based urethane (meth)acrylate compound UA9 is 0.741.

### [Other constituent components of acrylic adhesive compositions]

Constituent components of the acrylic adhesive compositions other than the polytetramethylene glycol-based urethane (meth)acrylate compounds UA1 to UA9 are as follows. · Polytetramethylene glycol-based urethane (meth)acrylate compound UA10

A commercially available product obtained by reacting a polytetramethylene glycol having a molecular weight of 650 as (a) the polyol compound and hydrogenated diphenylmethane diisocyanate as (b) the polyisocyanate compound such that the molar ratio (b)/(a) of (b) the polyisocyanate compound to (a) the polyol compound becomes 2.0, and using 2-hydroxyethyl acrylate as (c) the terminal (meth)acrylating agent
Polytetramethylene glycol (PTG-2900SN, manufactured by Hodogaya Chemical Co., Ltd.)
· Acryloylmorpholine (ACMO, manufactured by KJ Chemicals Corporation)
· Isobornyl methacrylate (Light Ester IB-X, manufactured by Kyoeisha Chemical Co., Ltd.)
· Methacrylic acid (methacrylic acid, manufactured by Mitsubishi Chemical Corporation)
· Methyl methacrylate (MMA, manufactured by Mitsubishi Chemical Corporation)
· 2-Hydroxypropyl methacrylate (Light Ester HOP, manufactured by Kyoeisha Chemical Co., Ltd.)
· 2-Hydroxyethyl methacrylate (Light Ester EH, manufactured by Kyoeisha Chemical Co., Ltd.)
· 2-Methacryloyloxyethyl acid phosphate (Light Ester P-1M, phosphate group-containing methacrylic monomer, manufactured by Kyoeisha Chemical Co., Ltd.)
· Dicyclopentanyl methacrylate (FANCRYL FA-513M, manufactured by Resonac Corporation)
· Tetrahydrofurfuryl acrylate (Light Acrylate THF-A, manufactured by Kyoeisha Chemical Co., Ltd.)
· Light Ester 1,6HX (1,6-hexanediol dimethacrylate, manufactured by Kyoeisha Chemical Co., Ltd.)
· Light Ester BP-2EM (EO adduct of bisphenol A dimethacrylate, manufactured by Kyoeisha Chemical Co., Ltd.)
· CHP (Percumyl H80, cumene hydroperoxide, manufactured by NOF Corporation)
· Kane Ace M521 (MBS resin core-shell polymer, manufactured by Kaneka Corporation)
· Paraffin wax 115 (waxy material, manufactured by Nippon Seiro Co., Ltd.)
· Paraffin wax 125 (waxy material, manufactured by Nippon Seiro Co., Ltd.)
· EDTA (Chelest 400, sodium ethylenediaminetetraacetate tetrahydrate, manufactured by Chelest Corporation)
· NACEM Vanadyl (vanadyl acetylacetonate complex, manufactured by Nihon Kagaku Sangyo Co., Ltd.)
· Malic acid (reagent, manufactured by Tokyo Chemical Industry Co., Ltd.)
· Benzoquinone (reagent, manufactured by Tokyo Chemical Industry Co., Ltd.)
· Hydroquinone (reagent, manufactured by Tokyo Chemical Industry Co., Ltd.)
· AO-60 (hindered phenol-based antioxidant, manufactured by Adeka Corporation)
· Super Ester 100 (special rosin ester, manufactured by Arakawa Chemical Industries, Ltd.)
· Saccharin (reagent, o-sulfobenzimide, manufactured by Tokyo Chemical Industry Co., Ltd.)
· Acetylphenylhydrazine (manufactured by Sanuki Chemical Industry Co., Ltd.)
· Copper neodecanoate (5% copper solution, manufactured by Nihon Kagaku Sangyo Co., Ltd.)

### [Example 1]

In order to prepare a two-component acrylic adhesive, the following raw materials were used. As the component (A), 30 parts by weight of the polytetramethylene glycol-based urethane (meth)acrylate compound UA1 was used for both an agent A and an agent B; as the component (B), 40 parts by weight of isobornyl methacrylate, 10 parts by weight of 2-hydroxypropyl methacrylate, 18 parts by weight of methacrylic acid, and 1.5 parts by weight of 2-methacryloyloxyethyl acid phosphate were used for both the agent A and the agent B; and, as additives, 12 parts by weight of Kane Ace M521, 1 part by weight of paraffin wax 115, and 0.04 parts by weight of hydroquinone serving as a stabilizer were used for both the agent A and the agent B. As the component (C), 0.8 parts by weight of CHP (cumene hydroperoxide) was used for the agent A; as the component (D), 0.35 parts by weight of NACEM Vanadyl was used for the agent B; and, as other additives, 0.1 parts by weight of EDTA, 0.1 parts by weight of malic acid, and 0.03 parts by weight of benzoquinone were used for the agent A, and 0.1 parts by weight of AO-60 was used for the agent B.

The raw materials were thoroughly mixed and stirred to prepare the agent A and the agent B of the two-component acrylic adhesive. Kane Ace M521 and paraffin wax 115 were dissolved and mixed while being heated to about 60°C to 80°C. The viscosity of the resulting adhesive was measured using the B-type viscometer, and the viscosity of the agent A was found to be 4.9 Pa·s and the viscosity of the agent B was found to be 5.1 Pa·s.

The agent A and the agent B were loaded into a two-component cartridge at a ratio of agent A:agent B = 1:1. While the agent A and the agent B were mixed together at an end portion by using a static mixer, the resulting mixture was discharged and used as an adhesive. The tensile shear adhesive strength and the T-peel adhesive strength were measured. The results are shown in Table 1.

### [Examples 2 to 5]

Two-component acrylic adhesives were prepared in the same manner as in Example 1 except that UA2 to UA5 shown in Table 1 were used as the component (A), CHP serving as the component (C) was used in an amount of 0.4 parts by weight, and paraffin wax 125 was used in an amount of 0.5 parts by weight as an additive instead of paraffin wax 115. The viscosity of each agent B was measured using the parallel-plate rotational viscometer, and a relative value to the agent B of Example 1 was determined. The tensile shear adhesive strength and the T-peel adhesive strength were measured in the same manner as in Example 1 using the prepared agent A and agent B. The results are shown in Table 1.

### [Example 6]

A two-component acrylic adhesive was prepared in the same manner as in Example 2 except that UA6 was used as the component (A) and no paraffin wax was used, and the viscosity of the agent B was measured. The tensile shear adhesive strength and the T-peel adhesive strength were measured in the same manner as in Example 1 using the prepared agent A and agent B. The results are shown in Table 1.

### [Comparative Example 1]

A two-component acrylic adhesive was prepared in the same manner as in Example 2 except that UA10 was used as the component (A) and paraffin wax 125 was used in an amount of 0.3 parts by weight, and the viscosity of the agent B was measured. The tensile shear adhesive strength and the T-peel adhesive strength were measured in the same manner as in Example 1 using the prepared agent A and agent B. The results are shown in Table 1.

### [Comparative Examples 2 to 4]

Two-component acrylic adhesives were prepared in the same manner as in Example 2 except that UA7 to UA9 shown in Table 1 were used as the component (A), and the viscosity of each agent B was measured. The tensile shear adhesive strength and the T-peel adhesive strength were measured in the same manner as in Example 1 using the prepared agent A/agent B. The results are shown in Table 1.

### [Comparative Example 5]

A two-component acrylic adhesive was prepared in the same manner as in Example 2 except that a polytetramethylene glycol having no terminal (meth)acrylate group was used as the component (A), and the viscosity of the agent B was measured. The tensile shear adhesive strength and the T-peel adhesive strength were measured in the same manner as in Example 1 using the prepared agent A and agent B. The viscosity relative value was 65, the tensile shear adhesive strength was 8.6 N/mm², and the T-peel adhesive strength was 0.4 N/mm.

**[Table 1]**

| | Example | | | | | | Comparative Example | | | |
|---|---|---|---|---|---|---|---|---|---|---|
| | 1 | 2 | 3 | 4 | 5 | 6 | 1 | 2 | 3 | 4 |
| Polytetramethylene glycol-based urethane (meth)acrylate compound | UA1 | UA2 | UA3 | UA4 | UA5 | UA6 | UA10 | UA7 | UA8 | UA9 |
| (b) Polyisocyanate compound /(a) Polyol compound (molar ratio) | 0.379 | 0.370 | 0 | 0.379 | 0.379 | 0.379 | 2.000 | 0.842 | 0.741 | 0.741 |
| viscosity (relative value) | 100 | 83 | 49 | 88 | 112 | 106 | 45 | 710 | 546 | 424 |
| Tensile shear adhesive strength (N/mm²) | 31.1 | 30.6 | 30.1 | 30.5 | 31.5 | 30.9 | 29.0 | 30.9 | 30.8 | 32.7 |
| T-peel adhesive strength (N/mm) | 10.4 | 11.1 | 10.4 | 10.2 | 11.4 | 11.1 | 1.4 | 12.1 | 12.5 | 11.9 |

As is apparent from Examples 1 to 6, the acrylic adhesives of the present invention in which the molar ratio (b)/(a) of (b) the polyisocyanate compound to (a) the polyol compound in the used polytetramethylene glycol-based urethane (meth)acrylate compound is 0 to 0.5 are found to be acrylic adhesives that have low viscosity and excellent workability and exhibit high peel strength and shear strength. On the other hand, in Comparative Example 1, in which the molar ratio (b)/(a) of (b) the polyisocyanate compound to (a) the polyol compound in the used polytetramethylene glycol-based urethane (meth)acrylate compound is 2.0, although low viscosity and high shear strength are exhibited, the value of the peel strength is very low.

In Comparative Examples 2 to 4, in which the molar ratio (b)/(a) of (b) the polyisocyanate compound to (a) the polyol compound in the used polytetramethylene glycol-based urethane (meth)acrylate compound is more than 0.5 and 1.0 or less, although high peel strength and shear strength are exhibited, the viscosity is very high, resulting in poor workability.

In Comparative Example 5, in which the ratio (b)/(a) is 0 but the polytetramethylene glycol having no terminal (meth)acrylate group was used, although the viscosity is low, the values of the peel strength and the shear strength are very low.

### [Example 7]

An agent A and an agent B were prepared in the same manner as in Example 2 except that 15 parts by weight of UA1 was used as the component (A), and the viscosity relative value, the tensile shear adhesive strength, and the T-peel adhesive strength were measured. The viscosity relative value was 57, the tensile shear adhesive strength was 29.8 N/mm², and the T-peel adhesive strength was 4.4 N/mm.

### [Example 8]

An agent A and an agent B were prepared in the same manner as in Example 2 except that 60 parts by weight of UA1 was used as the component (A), and the viscosity relative value, the tensile shear adhesive strength, and the T-peel adhesive strength were measured. The viscosity relative value was 247, the tensile shear adhesive strength was 24.1 N/mm², and the T-peel adhesive strength was 9.8 N/mm.

### [Example 9]

A two-component acrylic adhesive was prepared in the same manner as in Example 1 except that 18 parts by weight of Kane Ace M521 was used as an additive for both an agent A and an agent B, the viscosity of the agent B was measured, and the viscosity relative value was found to be 199. The tensile shear adhesive strength and the T-peel adhesive strength were measured in the same manner as in Example 1 using the prepared agent A/agent B. The tensile shear adhesive strength was 30.2 N/mm², and the T-peel adhesive strength was 10.2 N/mm.

### [Example 10]

As the component (A), 30 parts by weight of the polytetramethylene glycol-based urethane (meth)acrylate compound UA1 was used for both an agent A and an agent B; as the component (B), 50 parts by weight of methyl methacrylate, 18 parts by weight of methacrylic acid, and 1.5 parts by weight of 2-methacryloyloxyethyl acid phosphate were used for both the agent A and the agent B; and, as an additive, 12 parts by weight of Kane Ace M521 was used for both the agent A and the agent B. As the component (C), 0.4 parts by weight of CHP (cumene hydroperoxide) was used for the agent A; and, as the component (D), 0.35 parts by weight of NACEM Vanadyl was used for the agent B.

The raw materials were thoroughly mixed and stirred to prepare the agent A and the agent B of a two-component acrylic adhesive. Kane Ace was dissolved and mixed while being heated to about 60°C.

The viscosity of the agent B was measured, and the viscosity relative value was found to be 44. The tensile shear adhesive strength and the T-peel adhesive strength were measured in the same manner as in Example 1 using the prepared agent A/agent B. The tensile shear adhesive strength was 29.5 N/mm², and the T-peel adhesive strength was 10.8 N/mm.

### [Example 11]

An agent A and an agent B were prepared in the same manner as in Example 7 except that, as the component (A), 40 parts by weight of the polytetramethylene glycol-based urethane (meth)acrylate compound UA1 was used for both the agent A and the agent B, as the component (B), 30 parts by weight of methyl methacrylate, 10 parts by weight of hydroxypropyl methacrylate, 5 parts by weight of acryloylmorpholine, 13 parts by weight of methacrylic acid, and 1.5 parts by weight of 2-methacryloyloxyethyl acid phosphate were used for both the agent A and the agent B, and, as an additive, 6 parts by weight of Kane Ace M521 was used for both the agent A and the agent B, and the viscosity relative value, the tensile shear adhesive strength, and the T-peel adhesive strength were measured. The viscosity relative value was 84, the tensile shear adhesive strength was 24.3 N/mm², and the T-peel adhesive strength was 9.9 N/mm.

### [Example 12]

An agent A and an agent B were prepared in the same manner as in Example 7 except that, as the component (A), 20 parts by weight of the polytetramethylene glycol-based urethane (meth)acrylate compound UA1 was used for both the agent A and the agent B, and, as the component (B), 40 parts by weight of methyl methacrylate, 20 parts by weight of isobornyl methacrylate, 10 parts by weight of hydroxypropyl methacrylate, 18 parts by weight of methacrylic acid, and 1.5 parts by weight of 2-methacryloyloxyethyl acid phosphate were used for both the agent A and the agent B, and the viscosity relative value, the tensile shear adhesive strength, and the T-peel adhesive strength were measured. The viscosity relative value was 15, the tensile shear adhesive strength was 34.3 N/mm², and the T-peel adhesive strength was 11.1 N/mm.

### [Example 13]

An agent A and an agent B were prepared in the same manner as in Comparative Example 1 except that, as the component (A), UA1 was used for both the agent A and the agent B, 2-methacryloyloxyethyl acid phosphate serving as the component (B) was not added to the agent B but was added in an amount of 3 parts by weight only to the agent A, 4 parts by weight of CHP serving as the component (C) was used for the agent A, and 2 parts by weight of ethylenethiourea was used for the agent B as the component (D), and the viscosity relative value, the tensile shear adhesive strength, and the T-peel adhesive strength were measured. The viscosity relative value was 92, the tensile shear adhesive strength was 10.7 N/mm², and the T-peel adhesive strength was 7.8 N/mm.

### [Example 14]

A two-component acrylic adhesive was prepared in the same manner as in Example 2 except that UA1 was used as the component (A) and 20 parts by weight of a rosin ester (Super Ester 100) was added as an additive, the viscosity of the agent B was measured, and the viscosity relative value was found to be 129. The tensile shear adhesive strength and the T-peel adhesive strength were measured in the same manner as in Example 1 using the prepared agent A/agent B. The tensile shear adhesive strength was 28.4 N/mm², and the T-peel adhesive strength was 9.7 N/mm.

### [Example 15]

A two-component acrylic adhesive was prepared in the same manner as in Example 1 except that 6 parts by weight of Kane Ace M521 was used as an additive for both the agent A and the agent B, the viscosity of the agent B was measured, and the viscosity relative value was found to be 34. The tensile shear adhesive strength and the T-peel adhesive strength were measured in the same manner as in Example 1 using the prepared agent A/agent B. The tensile shear adhesive strength was 31.0 N/mm², and the T-peel adhesive strength was 10.3 N/mm.

### [Example 16]

An agent A and an agent B were prepared in the same manner as in Comparative Example 1 except that, as the component (A), UA1 was used for both the agent A and the agent B, and, as the component (B), 40 parts by weight of isobornyl methacrylate, 10 parts by weight of 2-hydroxypropyl methacrylate, 10 parts by weight of hydroxyethyl methacrylate, 5 parts by weight of Light Ester BP-2EM, 5 parts by weight of Light Ester 1,6HX, 10 parts by weight of dicyclopentanyl methacrylate, 5 parts by weight of tetrahydrofurfuryl acrylate, 18 parts by weight of methacrylic acid, and 1.5 parts by weight of 2-methacryloyloxyethyl acid phosphate were used for both the agent A and the agent B, and the viscosity relative value, the tensile shear adhesive strength, and the T-peel adhesive strength were measured. The viscosity relative value was 32, the tensile shear adhesive strength was 30.6 N/mm², and the T-peel adhesive strength was 4.2 N/mm.

### [Example 17]

An agent A was prepared with the following formulation. As the component (A), 30 parts by weight of the polytetramethylene glycol-based urethane (meth)acrylate compound UA1 was used; as the component (B), 40 parts by weight of isobornyl methacrylate, 10 parts by weight of 2-hydroxypropyl methacrylate, 18 parts by weight of methacrylic acid, and 1.5 parts by weight of 2-methacryloyloxyethyl acid phosphate were used; as additives, 12 parts by weight of Kane Ace M521, 0.04 parts by weight of hydroquinone serving as a stabilizer, 0.63 parts by weight of saccharin, and 0.32 parts by weight of acetylphenylhydrazine were used; and, as the component (C), 0.4 parts by weight of CHP was used. As the component (D), NACEM Vanadyl was dissolved in ethanol such that the vanadium content was 0.5% by weight to prepare an agent B.

The viscosity of the agent A was measured using the parallel-plate rotational viscometer, and the viscosity relative value was determined. The agent B was thinly applied as a primer to one surface of an SPCC steel sheet, the solvent was then dried, the agent A was applied to another SPCC steel sheet, and the two steel sheets were bonded together while the thickness of the adhesive layer was adjusted. After aging, the tensile shear adhesive strength and the T-peel adhesive strength were measured. The viscosity relative value was 104, the tensile shear adhesive strength was 21.4 N/mm², and the T-peel adhesive strength was 5.6 N/mm.

### [Example 18]

An agent A and an agent B were prepared in the same manner as in Example 17 except that 4 parts by weight of CHP was used as the component (C), and the viscosity relative value, the tensile shear adhesive strength, and the T-peel adhesive strength were measured. The viscosity relative value was 87, the tensile shear adhesive strength was 17.4 N/mm², and the T-peel adhesive strength was 5.3 N/mm.

### [Example 19]

An agent A and an agent B were prepared in the same manner as in Example 17 except that, as the component (D), instead of NACEM Vanadyl, a 5% copper neodecanoate solution was further diluted with ethanol such that the copper content was 0.5% by weight to prepare the agent B. Test pieces were prepared in the same manner as in Example 17 except that the test pieces were prepared by bringing SPCC steel sheets into close contact without setting the thickness of the adhesive layer, and the tensile shear adhesive strength and the T-peel adhesive strength were measured. The tensile shear adhesive strength was 24.8 N/mm², and the T-peel adhesive strength was 4.6 N/mm.

## Claims

1. An acrylic adhesive composition comprising, as essential components:
(A) a polytetramethylene glycol-based urethane (meth)acrylate compound having a terminal (meth)acrylate group,
the polytetramethylene glycol-based urethane (meth)acrylate compound being obtained by reacting (c) a terminal (meth)acrylating agent with a polytetramethylene glycol-based prepolymer obtained by reacting (a) a polyol compound and (b) a polyisocyanate compound at a molar ratio of the component (b)/the component (a) in a range of 0 to 0.5;
(B) a polymerizable vinyl monomer;
(C) an organic peroxide; and
(D) a reducing agent.

2. The acrylic adhesive composition according to claim 1, wherein the component (A) is contained in an amount of 5 to 60 parts by weight, the component (B) is contained in an amount of 40 to 95 parts by weight, the component (C) is contained in an amount of 0.05 to 10 parts by weight, and the component (D) is contained in an amount of 0.01 to 10 parts by weight, based on 100 parts by weight of a total amount of the component (A) and the component (B).

3. The acrylic adhesive composition according to claim 1 or 2, wherein (b) the polyisocyanate compound is one or more types selected from the group consisting of the following (i) to (iv):
(i) aliphatic polyisocyanate compounds;
(ii) alicyclic polyisocyanate compounds;
(iii) biurets, isocyanurates, adducts, allophanates, carbodiimides, or polymers of aliphatic polyisocyanate compounds; and
(iv) biurets, isocyanurates, adducts, allophanates, carbodiimides, or polymers of alicyclic polyisocyanate compounds.

4. The acrylic adhesive composition according to claim 1 or 2, wherein (c) the terminal (meth)acrylating agent is an isocyanate group-containing (meth)acrylate compound or a carboxyl group-containing (meth)acrylate compound.

5. The acrylic adhesive composition according to claim 1 or 2, wherein (B) the polymerizable vinyl monomer includes a (meth)acryloyl-based monomer having one or more (meth)acryloyl groups.

6. The acrylic adhesive composition according to claim 1 or 2, wherein (B) the polymerizable vinyl monomer includes methacrylic acid.

7. The acrylic adhesive composition according to claim 1 or 2, wherein (B) the polymerizable vinyl monomer includes a (meth)acrylic acid ester containing a phosphoric acid ester group.

8. The acrylic adhesive composition according to claim 1 or 2, further comprising (E) a core-shell rubber.

9. A cured product of the acrylic adhesive composition according to claim 1 or 2.

10. A product comprising the cured product according to claim 9 as a constituent element.
